# EUROPÄISCHE PATENTANMELDUNG

(11) **EP 0 841 550 A2**
(43) Veröffentlichungstag der Anmeldung: **13.05.1998**
(21) Anmeldenummer: 97119203.4
(22) Anmeldetag: 04.11.1997
(51) Int. Cl.: G01L 5/00, G01M 17/02, G01N 19/02

(54) **Fahrzeugreifen mit einer Einrichtung zur Bestimmung der Kraftschlussverhältnisse**

(30) Priorität: 08.11.1996 DE 19646235
(71) Anmelder: Continental Aktiengesellschaft, 30165 Hannover (DE)
(72) Erfinder: Becherer, Thomas, 30171 Hannover (DE)

(57) **Zusammenfassung**

Ein Fahrzeugreifen, insbesondere für Kraftfahrzeuge, mit einer Einrichtung zur Erzeugung von Daten zur weiteren Bestimmung der aktuellen Kraftschlußverhältnisse zwischen der Reifenaufstandsfläche (5) und der Fahrbahn (8), die im wesentlichen aus mehreren miteinander in Wirkverbindung stehenden, magnetischen Einzelsensoren (4a, 4b, 4c, 4d) und einem den Einzelsensoren (4a, 4b, 4c, 4d) radial gegenüberliegenden Magnetfeld besteht, wobei die aus einer Gruppe von Einzelsensoren (4a, 4b, 4c, 4d) gebildeten Sensoren (4) mit einer Auswerteeinheit (6) verbunden sind, zeichnet sich dadurch aus, daß die Sensoren (4a, 4b, 4c, 4d) in wenigstens einem der Profilklötze (1) und das Magnetfeld im Gürtel (11) angeordnet sind, wobei das Magnetfeld durch partielle Magnetisierung des Gürtels (11) während der Reifenherstellung erzeugt wird.

## Beschreibung

Die Erfindung betrifft einen Fahrzeugreifen, insbesondere für Kraftfahrzeuge, mit einer Einrichtung zur Erzeugung von Daten zur weiteren Bestimmung der aktuellen Kraftschlußverhältnisse zwischen der Reifenaufstandsfläche und der Fahrbahn, die im wesentlichen aus mehreren miteinander in Wirkverbindung stehenden, magnetischen Einzelsensoren und einem den Einzelsensoren radial gegenüberliegenden Magnetfeld besteht, wobei die aus einer Gruppe von Einzelsensoren gebildeten Sensoren mit einer Auswerteeinheit verbunden sind.

Ein solcher Fahrzeugreifen ist beispielsweise aus der DE 39 37 966 C2 bekannt. In dieser Druckschrift ist ein Verfahren zur Bestimmung der Kraftschlußverhältnisse zwischen Fahrzeugreifen und Fahrbahn beschrieben, bei dem an einer oder mehreren Meßstellen im Reifen mindestens die in einer horizontalen Richtung und in Normalrichtung beim Durchlaufen des Reifenlatsches auftretenden lokalen Verformungen erfaßt werden. Aus den sich ergebenden lokalen Verformungen werden die Normalkräfte und die Horizontalkräfte ermittelt und der Kraftschlußbeiwert als das Verhältnis der Horizontalkraft zur Normalkraft bestimmt.

Durch die Reibung zwischen dem Fahrzeugreifen und der Fahrbahn (Kraftschluß) werden die Beschleunigungs- und Seitenführungskräfte übertragen. Das Maximum des Kraftschlusses bestimmt die Grenzen eines stabilen Fahrverhaltens. Zur Einhaltung eines stabilen Fahrverhaltens ist es deshalb notwendig, daß der momentane Kraftschlußbeiwert immer unterhalb des maximalen Kraftschlußbeiwertes liegt. Als Kraftschlußbeiwert ist das Verhältnis der parallel zur Fahrbahn wirkenden Horizontalkraft zur vertikal wirkenden Normalkraft definiert. Zur Betrachtung der Kraftschlußverhältnisse in Reifenumfangsrichtung und in Querkraftrichtung kann der Kraftschlußbeiwert in eine Umfangskomponente bzw. Längskomponente und eine Querkomponente zerlegt werden.

Wegen der Elastizität des Reifenumaterials können die ermittelten lokalen Verformungen im Reifen eine Aussage über diejenigen Kräfte liefern, die diese Verformungen hervorrufen. Mit ausreichender Genauigkeit können also die von der Fahrbahn in den Reifen eingeleiteten Kräfte herangezogen werden, um unmittelbar den Kraftschlußbeiwert zu errechnen.

Der bekannte Fahrzeugreifen weist im Bereich des Laufstreifens mindestens einen magnetischen Sensor auf, der die dort auftretenden lokalen Verformungen erfaßt und über eine Signalübertragungseinrichtung Meßsignale an eine Auswerteeinrichtung liefert. Damit die im Profilklotz auftretenden lokalen horizontalen bzw. vertikalen Spannungen, Dehnungen und Verformungen ermittelt werden können, sind in der DE 39 37 966 verschiedene konstruktive Ausgestaltungen eines Reifens beschrieben.

Beispielsweise sind in die Profilklötze Permanentmagnete eingebettet, die ihre Lage je nach den auftretenden Verformungen ändern. Mit der Gürtellage sind Sensoren verbunden, die auf Änderungen des Abstandes zu den Magneten ansprechen. Bei dieser Ausbildung müssen die Sensoren sicher mit dem Gürtel verbunden werden, da ihre Lageänderungen definiert nachvollziehbar sein müssen. Sowohl die Magnete in den Profilklötzen als auch die Sensoren am Gürtel verändern jedoch ihre Relativlage bei der Reifenherstellung, insbesondere beim Vulkanisieren und Bombieren. Da nicht vorhersehbar ist, wie sich die Relativlage der beiden Bauteile zueinander im Reifen ändert, ist es notwendig, jeden fertiggestellten Reifen anschließend noch zu kalibrieren. Dies erfordert einen hohen Fertigungsaufwand, der mit entsprechenden Kosten verbunden ist. Fehler beim Kalibrieren führen dazu, daß das spätere Meßergebnis unbrauchbar ist.

Gemäß einem weiteren Ausführungsbeispiel ragt ein Taststift durch die Reifenkarkasse bis in einen der Profilklötze des Reifenprotektors. An seinem in das Reifeninnere ragenden Ende trägt der Taststift als Sender vier Permanentmagnete. Ein Sensorgehäuse ist mittels Stiften in der Karkasse verankert und trägt als Empfänger beispielsweise vier Hallgeneratoren. Die Spannungen, Dehnungen und Verformungen verursachen eine proportionale Schwenk- bzw. Hubbewegung des in der Karkasse gelagerten Taststiftes und somit einer Abstandsänderung zwischen den Magneten bzw. des von ihnen gebildeten Magnetfeldes und den Hallgeneratoren. Hierdurch wird eine Änderung der Hallspannung hervorgerufen, die als Meßsignal an die Auswerteeinrichtung übertragen werden. Dieser bekannte Reifen baut noch aufwendiger. Durch den in den Profilklotz eingelassenen Magneten, dessen Bewegung mittels Hall- und/oder magnetoresestiver Sensoren detektiert wird, müssen auch hier mindestens zwei Körper in den Reifen eingebracht werden. Neben den Kosten für die entsprechenden Bauteile sind die Herstellkosten ebenfalls hoch.

Von dieser Problemstellung ausgehend soll der Aufbau des eingangs erläuterten Fahrzeugreifens vereinfacht werden.

Zur Problemlösung werden die Sensoren in wenigstens einem der Profilklötze und das Magnetfeld im Gürtel angeordnet, wobei das Magnetfeld durch partielle Magnetisierung des Gürtels während der Reifenherstellung erzeugt wird.

Durch diese Ausgestaltung wird das Magnetfeld in die Gürtellage verlegt. Die Gürtellage befindet sich in einem fertigen Reifen an reproduzierbarer Stelle. Die relative Lage der Sensoren im Profilklotz ist zunächst recht nebensächlich, da die Stärke des Magnetfeldes an die Sensorlage angepaßt werden kann. Beispielsweise über Röntgenstrahlen kann exakt ermittelt werden, wo sich die Gürtellage und wo sich die Sensoren befinden. Durch entsprechend gewählte Magnetisierung wird dann der Reifen fertiggestellt. Da jeder Reifen individuell magnetisiert werden kann, entfällt das aufwendige Kalibrieren. Der Aufbau des Reifens wird wesentlich vereinfacht, da keine aufwendige Fixierung der Sensoren im Profilklotz notwendig wird. Da gegenüber dem bekannten Reifen weniger Bauteile notwendig sind, sinkt nicht nur das Gewicht des Reifens, sondern auch die Herstellkosten werden deutlich reduziert.

Vorzugsweise werden unmittelbar die metallischen Cordfäden des Gürtels magnetisiert. Hierzu ist das Material der Cordfäden entsprechend zu wählen. Während der Herstellung kann das Magnetfeld durch Anlegen einer Induktionsspule erzeugt werden.

Vorzugsweise sind eine Mehrzahl von Sensoren und Magnetfeldern über den Umfang des Reifens regelmäßig verteilt angeordnet. Je mehr Sensoren vorhanden sind, umso genauer wird das Meßergebnis.

Zur Verstärkung der Magnetisierbarkeit enthält der Gürtel vorteilhafterweise ferromagnetisches Pulver. Dieses Pulver kann bei der Fertigung in das Gummi des Gürtels eingestreut werden.

Mit Hilfe einer Zeichnung soll die Erfindung nachfolgend näher erläutert werden. Es zeigt:

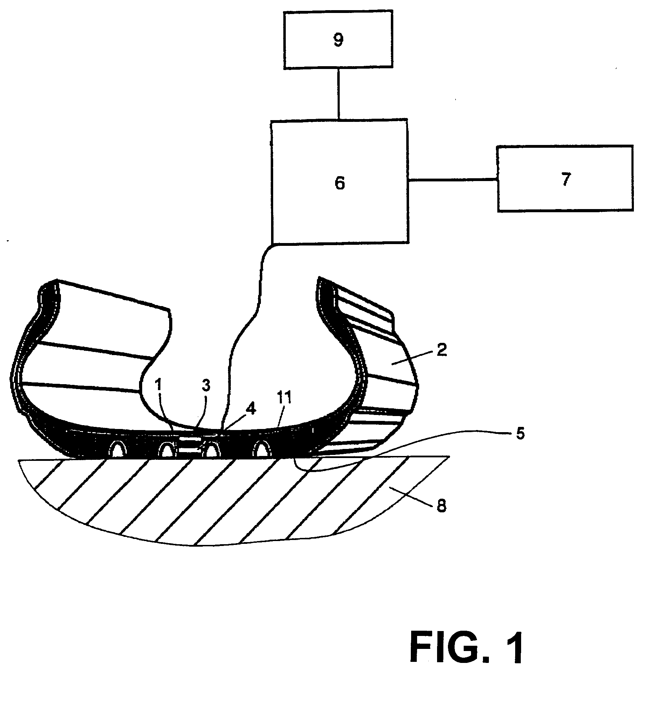

- Figur 1 -: die vereinfachte Darstellung eines Fahrzeugreifens im Teilschnitt mit einer angeschlossenen Auswerteeinheit;

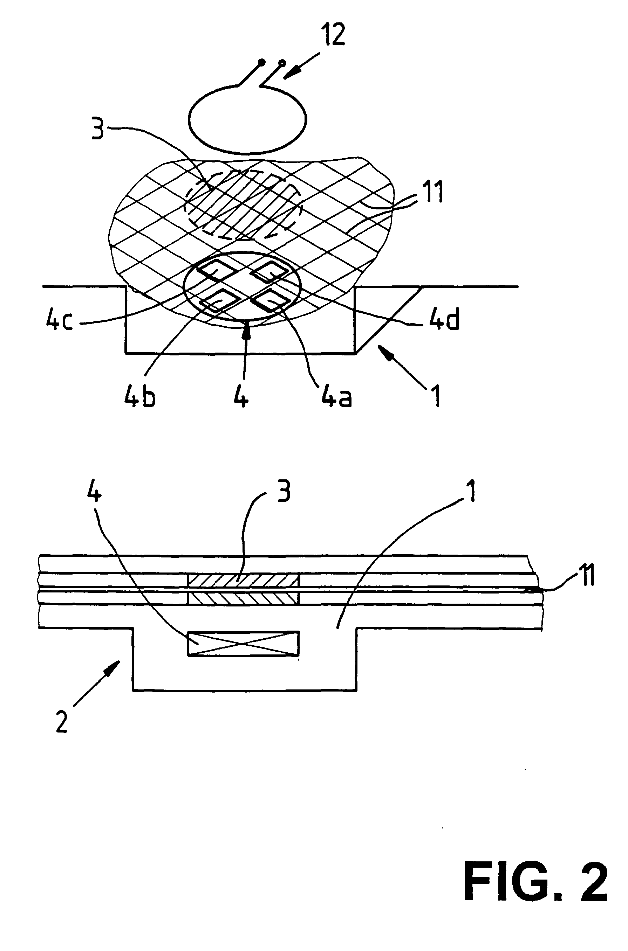

- Figur 2 -: ein Prinzipskizze der Sensoranordnung.

In den Profilklötzen 1 des Reifens 2 sind über den Umfang regelmäßig verteilt eine Mehrzahl von Magnetfeldsensoren 4 angeordnet. Die Sensoren 4 sind beispielsweise Hall- oder magnetoresestive Sensoren, die aus vier Einzel-Sensorelemente 4a, 4b, 4c, 4d bestehen, wobei sich zwei Sensorelemente 4a, 4c; 4b, 4d jeweils gegenüberliegen. Die Sensoren 4 stehen mit einer Auswerteeinheit 6 in Verbindung, die wiederum mit einer Eingabevorrichtung 7 und einer Anzeige- und/oder Alarmvorrichtung 9 verbunden ist. Der den Sensoren 4 gegenüberliegende Bereich 13 im Gürtel 11 ist magnetisiert. Hierzu werden die Stahlcorde bei der Reifenfertigung über eine Feldspule 12 partiell magnetisiert. Die Verbindung von Sensoren 4 zur Auswerteeinheit 6 kann berührungslos, beispielsweise induktiv, über ein frequenzmoduliertes Signal oder über Schleifringe erfolgen. In der Auswerteeinheit 6 wird aus dem zeitlichen Verlauf der Meßsignale, auf den derzeit beanspruchten Kraftschlußbeiwert im Reifenlatsch 5 geschlossen. Die durch die Spannungen in Umfangsrichtung, in Querrichtung und in Normalrichtung erfolgten Relativverschiebungen der Einzelsensoren 4a, 4b, 4c, 4d zum magnetisierten Bereich 3 liefern eine Information über die Änderung der räumlichen Lage und somit eine Aussage über die Verformungen im Reifenlatsch 5. In der Auswerteeinheit 6 kann das Verhältnis von aktuellem Kraftschlußbeiwert zu maximalen Kraftschlußbeiwert gebildet werden und wenn ein beispielsweise über die Eingabvorrichtung 7 eingegebener Maximalwert überschritten wird, erhält der Fahrer von der Anzeige- oder Alarmvorrichtung 9 ein Signal über den derzeit kritischen Fahrzustand. Hinsichtlich des weiteren Verfahrensablaufs wird auf den Inhalt der DE 39 37 966 vollständig Bezug genommen.

Um das Magnetfeld im Gürtel verstärken zu können, kann in hier nicht näher dargestellter Weise in das Gürtelgummi ferromagnetisches Pulver eingestreut sein.

### Bezugszeichenliste

- 1: Profilklotz
- 2: Fahrzeugreifen
- 3: Magnetfeld
- 4: Sensor
- 4a: Sensorelement
- 4b: Sensorelement
- 4c: Sensorelement
- 4d: Sensorelement
- 5: Reifenaufstandsfläche/Latsch
- 6: Auswerteeinheit
- 7: Eingabevorrichtung
- 8: Fahrbahnoberfläche
- 9: Anzeige- oder Alarmvorrichtung
- 11: Stahlgürtel

## Patentansprüche

1. Fahrzeugreifen, insbesondere für Kraftfahrzeuge, mit einer Einrichtung zur Erzeugung von Daten zur weiteren Bestimmung der aktuellen Kraftschlußverhältnisse zwischen der Reifenaufstandsfläche (5) und der Fahrbahn (8), die im wesentlichen aus mehreren miteinander in Wirkverbindung stehenden, magnetischen Einzelsensoren (4a, 4b, 4c, 4d) und einem den Einzelsensoren (4a, 4b, 4c, 4d) radial gegenüberliegenden Magnetfeld besteht, wobei aus einer Gruppe von Einzelsensoren (4a, 4b, 4c, 4d) gebildete Sensoren (4) mit einer Auswerteeinheit (6) verbunden sind, **dadurch gekennzeichnet, daß** die Sensoren (4a, 4b, 4c, 4d) in wenigstens einem der Profilklötze (1) und das Magnetfeld im Gürtel (11) angeordnet sind, wobei das Magnetfeld durch partielle Magnetisierung des Gürtels (11) während der Reifenherstellung erzeugt wird.

2. Fahrzeugreifen nach Anspruch 1, **dadurch gekennzeichnet, daß** die Cordfäden des Gürtels (11) magnetisiert sind.

3. Fahrzeugreifen nach Anspruch 1 oder 2, **dadurch gekennzeichnet, daß** das Magnetfeld durch Anlegen einer Induktionsspule (12) erzeugt wird.

4. Fahrzeugreifen nach Anspruch 1, **dadurch gekennzeichnet, daß** zur Verstärkung der Magnetisierbarkeit der Gürtel (11) ferromagnetisches Pulver enthält.
